# EUROPÄISCHE PATENTSCHRIFT

(11) **EP 1 884 487 B1**
(45) Veröffentlichungstag und Bekanntmachung des Hinweises auf die Patenterteilung: **27.05.2009**
(21) Anmeldenummer: 06015887.0
(22) Anmeldetag: 31.07.2006
(51) Int. Cl.: B65G 17/00, B65G 63/02, B65G 35/06, B60P 1/36

(54) **Fahrzeugantriebssystem, Fahrzeugantriebseinheit, Verfahren und Steuerungsprogramm zum Betrieb eines Fahrzeugantriebssystems**
Vehicle drive system, vehicle propulsion unit, method and control program for operating a vehicle drive system
Système de traction pour véhicule, ensemble de propulsion de véhicule, procédé et programme de commande pour opérer un système de traction de véhicule

(43) Veröffentlichungstag der Anmeldung: 06.02.2008
(73) Patentinhaber: SIEMENS AKTIENGESELLSCHAFT, 80333 München (DE)
(72) Erfinder: Denk, Joachim, 90419 Nürnberg (DE); Hamann, Jens, Dr., 90765 Fürth (DE); Schür, Torsten, 91058 Erlangen (DE); Stoiber, Dietmar, 90763 Fürth (DE)

(56) Entgegenhaltungen:
- US-A- 1 535 785
- US-A- 3 529 481
- US-A1- 2006 113 168

## Beschreibung

Die vorliegende Erfindung betrifft ein Fahrzeugantriebssystem entsprechend dem Oberbegriff des Anspruchs 1. Ein solches Fahrzeugantriebssystem ist aus US 2006/113168 A1 bekannt.

Insbesondere bei Containerhafenanlagen besteht das Bedürfnis nach Antriebssystemen, mit denen große Lasten schnell bewegt werden können, um auf diese Weise Umschlagszeiten für in Containern transportierten Gütern zu minimieren. Bisherige Rad-Schiene-Systeme können diese Anforderungen speziell bei sehr großen Containerhafenanlagen aufgrund verhältnismäßig geringer maximaler Beschleunigung im Bereich von ca. 0,4 m/s² und sich daraus ergebender langer Transportzeiten nur ansatzweise erfüllen. Deutlich bessere Beschleunigungswerte und höhere Geschwindigkeiten bieten in W.-R. Canders et al. "Linear Motor Transfer Technology (LMTT) for Container Terminals" LDIA '98 Tokyo, Japan beschriebene Linearmotorsysteme.

Ausgehend vom bekannten Stand der Technik liegt der vorliegenden Erfindung die Aufgabe zugrunde, ein kostengünstiges Fahrzeugantriebssystem anzugeben, das einen schnellen Transport schwerer Lasten ermöglicht.

Diese Aufgabe wird erfindungsgemäß durch ein Fahrzeugantriebssystem mit den in Anspruch 1 angegebenen Merkmalen gelöst. Ein Verfahren und ein Steuerungsprogramm zum Betrieb eines erfindungsgemäßen Fahrzeugantriebssystems sind in den Ansprüchen 7 und 10 angegeben. Vorteilhafte Weiterbildungen der vorliegenden Erfindung sind in den abhängigen Ansprüchen angebeben.

Ein solches Fahrzeugantriebssystem erlaubt für Lasten von mehr als 100t Gewicht Beschleunigungen mit mindestens 1 m/s².

Ein besonders günstiger Systemaufbau ergibt sich bei einem System mit mehreren im wesentlich parallelen Fahrwegen, wenn die Antriebskette entlang eines zweiten im wesentlichen parallelen Fahrweges umlaufend beweglich ist. Erfindungsgemäß ist am Fahrzeug eine zweite Antriebseinheit vorgesehen, deren Zahnrad in eine zweite entlang des Fahrweges gegenläufig bewegliche Antriebskette bzw. Antriebskettenabschnitt greift.
Bei der Erfindung kann eine Antriebskette für mehrere Fahrwege gleichzeitig zum Beschleunigen oder Bremsen genutzt werden. Eine besonders wirksame Kraftübertragung ergibt sich, wenn zumindest ein Zahnrad formschlüssig in eine Antriebskette greift.

Eine Bremseinrichtung kann entweder als Wirbelstrombremse oder als in ein Stromnetz und/oder Batteriesystem zurückspeisender Gleichstrom-, Wechselstrom oder Drehstrommotor ausgestaltet sein. Auch eine Kombination aus Wirbelstrombremse und zusätzlichem elektrischen Generator zur Versorgung elektrischer Verbraucher im Fahrzeug ist möglich. Eine Verwendung eines generatorisch betreibbaren Elektromotors als Bremseinrichtung bietet den Vorteil einer Energierückgewinnung anstelle einer Umsetzung von kinetischer Energie in thermische Energie wie bei herkömmlichen Bremseinrichtungen.

Zur bedarfsgerechten Regelung von Beschleunigung und Verzögerung ist eine Bremseinrichtung hinsichtlich ihres Bremsmoments vorzugsweise zwischen Leerlauf und vollem Bremsmoment stufenlos regulierbar.

Entsprechend dem erfindungsgemäßen Verfahren zum Betrieb eines Fahrzeugantriebssystems wird zumindest eine umlaufende Antriebskette mit im wesentlichen konstanter Umlaufgeschwindigkeit betrieben. Ein Fahrzeug wird durch Ausüben eines Bremsmoments auf ein Zahnrad beschleunigt, das in eine sich entlang des Fahrwegs in Fahrtrichtung bewegende Antriebskette greift. In einer zweiten Stufe kann das Fahrzeug darüber hinaus durch Ausüben eines Antriebsmoments auf das Zahnrad beschleunigt werden, das in die sich entlang des Fahrwegs in Fahrtrichtung bewegende Antriebskette greift.

Ein Abbremsen eines Fahrzeugs erfolgt erfindungsgemäß durch Ausüben eines Bremsmoments auf ein Zahnrad, das in eine sich entlang des Fahrwegs entgegen der Fahrtrichtung bewegende Antriebskette bzw. Antriebskettenabschnitt greift. Als Bremseinrichtungen können in ein Batteriesystem zurückspeisende Motoren verwendet werden und die Bremseinrichtungen bei Fahrzeugstillstand derart motorisch betrieben werden, daß betragsmäßig gleich große entgegengerichtete Antriebsmomente auf gegenläufige Antriebsketten übertragen werden, welche die Antriebsmomente auf generatorisch betriebene Antriebseinheiten der Antriebsketten übertragen. Durch die gleichmäßig auf die Antriebsketten verteilten Antriebsmomente heben sich Krafteinwirkungen auf das Fahrzeug bei einer Energierückspeisung im Stillstand gegenseitig, so daß die Fahrzeugpositionierung nicht nachteilig beeinflußt wird.

Darüber hinaus bietet ein geregeltes Beschleunigen mittels einer sich in Fahrtrichtung bewegenden Antriebskette und ein geregeltes Bremsen mittels einer sich entgegen der Fahrtrichtungbewegenden Antriebskette den Vorteil einer sehr genauen Positionierbarkeit des Fahrzeugs.

Das erfindungsgemäße Verfahren zum Betrieb eines Fahrzeugantriebssystems wird bevorzugt durch ein Steuerungsprogramm implementiert, das in einen Arbeitsspeicher eines Rechners ladbar ist. Das Steuerungsprogramm weist zumindest einen Codeabschnitt auf, bei dessen Ausführung zumindest eine umlaufend Antriebskette mit im wesentlichen konstanter Umlaufgeschwindigkeit betrieben wird, wenn das Steuerungsprogramm im Rechner abläuft. Außerdem wird ein Fahrzeug durch Ausüben eines Bremsmoments auf ein Zahnrad beschleunigt, das in eine sich entlang des Fahrwegs in Fahrtrichtung bewegende Antriebskette greift. In entsprechender Weise wird ein Fahrzeug durch Ausüben eines Bremsmoments auf ein Zahnrad abgebremst wird, das in eine sich entlang des Fahrwegs entgegen der Fahrtrichtung bewegende Antriebskette bzw. Antriebskettenabschnitt greift.

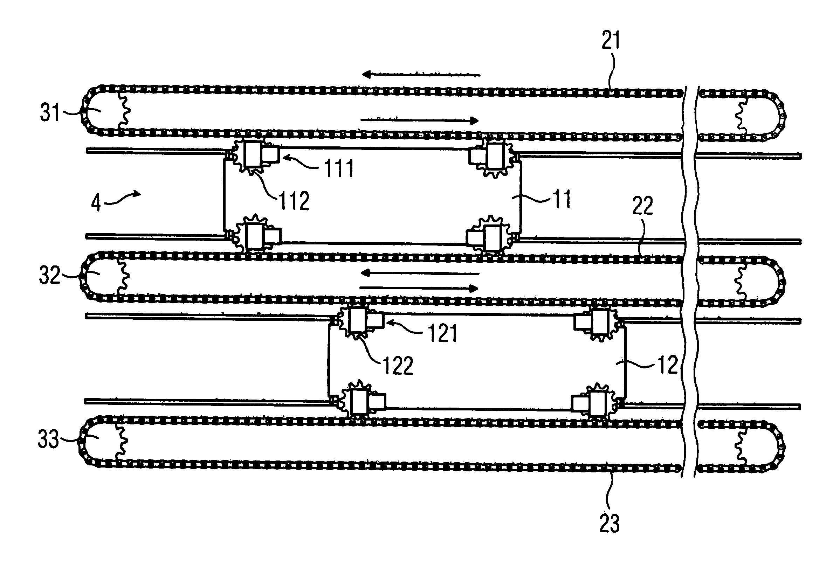

Die Erfindung wird nachfolgend an einem Ausführungsbeispiel anhand der Zeichnung näher erläutert. Es zeigt die
- Figur: ein schematisch dargestelltes Fahrzeugantriebssystem in der Draufsicht.

Ein in der Figur dargestelltes Fahrzeug 11, 12 wird über umlaufende mechanische Ketten 21 - 23 angetrieben. Dabei läuft an einer Längsseite des Fahrzeugs 11, 12 die Kette 21 - 23 in einer ersten Richtung und an der gegenüberliegenden Längsseite des Fahrzeugs 11, 12 eine weitere Kette 21 - 23 bzw. ein anderer Abschnitt derselben Kette 21 - 23 in einer zweiten entgegensetzten Richtung. Die umlaufenden Ketten werden 21 - 23 von zentralen Antriebseinheiten 31 - 33 auf konstanter Umlaufgeschwindigkeit gehalten. Diese konstante Umlaufgeschwindigkeit kann beispielsweise so groß sein wie die zu erreichende Endgeschwindigkeit eines Fahrzeugs 11, 12.

An jeden Fahrzeug 11, 12 ist im vorliegenden Beispiel mindestens eine Bremseinrichtung 111, 121 vorgesehen, die mittels eines Ritzels 112, 122 in die umlaufende Kette 21 - 23 greift. Das Ritzel 112, 122 ist an eine Bremseinheit gekoppelt. Das Bremsmoment der Bremseinheit kann zwischen Leerlauf - kein Bremsmoment - und dem vollem Bremsmoment - Blockieren des Ritzels 112, 122 - stufenlos variiert werden. Das Bremsmoment kann dabei einem vorgegebenen Sollwert folgen.

Im Leerlauf läuft die Kette 21 - 23 frei am Fahrzeug 11, 12 vorbei, und es wird keine Kraft von der Kette 21 - 23 auf das Fahrzeug übertragen. Das Fahrzeugs 11, 12 befindet sich beispielsweise während des Stillstandes im Leerlauf. Soll das Fahrzeug 11, 12 in Bewegung gesetzt werden, so wird am Ritzel 112, 122 ein Bremsmoment vorgegeben. Entsprechend dem wirksamen Durchmesser des Ritzels 112, 122 wird dadurch eine Vortriebskraft von der umlaufenden Kette 21 - 23 auf das Fahrzeug 11, 12 übertragen. Die Mitnehmerkraft einer Bremseinheit ergibt sich aus dem Quotienten von Bremsmoment und wirksamem Radius des Ritzels 112, 122. An einem Fahrzeug 11, 12 können mehrere Bremseinheiten angebracht sein. Da je eine Längsseite des Fahrzeugs 11, 12 für eine Fahrtrichtung zuständig ist, ergibt sich die gesamte Vorschubkraft aus der Summe der Vorschubkräfte der Bremseinheiten an der entsprechenden Längsseite. Während das Fahrzeug 11, 12 durch die Mitnehmerkraft beschleunigt wird, verringert sich die Relativgeschwindigkeit zwischen Kette 21 - 23 und Fahrzeug 11, 12. Wenn die Drehung des Ritzels 112, 122 vollständig abgebremst ist, dann läuft das Fahrzeug 11, 12 synchron zur Umlaufkette 21 - 23.

Es ist möglich, das Drehmoment, das von der Bremseinheit erzeugt wird, mittels Getriebe auf das Ritzel 112, 122 anzupassen. Insbesondere bei der Verwendung von generatorisch oder magnetisch wirkenden Bremseinheiten kann dies sinnvoll sein.

Die Beschleunigung des Fahrzeugs 11, 12 kann über das Bremsmoment der Bremseinrichtungen 111, 121 vorgegeben werden. Sofern die Ritzel 112, 122 formschlüssig in die Kette 21 - 23 eingreifen, sind wesentlich höhere Beschleunigungen als mit Rad-Schiene-Systemen möglich.

Soll das Fahrzeug 11, 12 verzögert werden, so kann Bremsmoment auf diejenigen Ritzel 112, 122 vorgegeben werden, die in die Umlaufkette 21 - 23 entgegen der Fahrtrichtung 4 eingreifen. Auf diese Wiese ist es möglich, durch entsprechend dosierte Vorgabe von Bremsmomenten, das Fahrzeug 11, 12 an einer gewünschten Position zum stehen zu bringen. Ist die gewünschte Position erreicht, kann das Fahrzeug durch Blockieren von Tragrädern in der jeweiligen Position gehalten werden. Das Verzögern des Fahrzeugs 11, 12 durch Eingriff in eine Gegenkette ermöglicht höhere Verzögerungswerte als dies reibungsgebundene Rad-Schiene-System zulassen würden.

Zu Begin einer Beschleunigungsphase ist die Bremsleistung groß, weil die Drehzahl des Ritzels groß ist. Gegen Ende des Beschleunigungsphase ist die Bremsleistung gering, weil die Drehzahl des Ritzels gering ist. Da die Bremsleistung zeitweise recht große Werte annehmen kann, erweist es sich als vorteilhaft, als Bremseinheit eine rückspeisefähige Einheit vorzusehen. Wird auf die Rückspeisefähigkeit verzichtet, dann vereinfacht sich der Aufwand. Die einzelnen Anwendungsszenarien werden nachfolgend vorgestellt.

### BREMSEINHEIT MIT PASSIVER MECHANISCHER BREMSE OHNE RÜCKSPEISUNG

Die Leistungen einer Bremseinheit während des Beschleunigungsvorgangs sind vergleichbar mit Bremsleistungen von Lastkraftwagen. Daher könnte als Bremseinheit eine LKW-Bremse verwendet werden, die beispielsweise pneumatisch oder hydraulisch angesteuert wird. Im Gegensatz zum Sicherheitskonzept bei LKWs ist aber der sichere Zustand nicht die Blockierung sondern die Öffnung der Bremse, weil bei blockierter Bremseinheit der Fahrzeug synchron zur Umlaufkette mitgezogen wird.

Die LKW-Bremse speist keine Energie zurück. Wenn dennoch elektrische Energie, beispielsweise für die Hilfs- und Steuerungsfunktionen, im oder auf dem Fahrzeug zur Verfügung stehen soll, dann können zusätzlich kleinere Generatoreinheiten am Fahrzeug angebracht sein, die bei vorhandener Relativgeschwindigkeit zwischen Umlaufkette und Fahrzeug über das Ritzel angetrieben werden. Wird das generatorische Drehmoment gleichmäßig auf zwei entlang eines Fahrweges zueinander gegenläufige Kette aufgeteilt, dann verschwindet die Kraftwirkung auf den Fahrzeug und stört die Positionierung nicht.

Anstelle von LKW-Bremseinheiten können auch Wirbelstrombremseinheiten mit mechanisch oder elektrisch steuerbarem Bremsmagnetfeld eingesetzt werden. Eine Wirbelstrombremseinheit mit elektrisch steuerbarem Bremsmagnetfeld kann beispielsweise ein Norm-Asynchronmotor sein, der mittels Gleichstrom erregt wird. Die Schlupfkennlinie eines solchen Norm-Asynchronmotors läßt sich dann mittels Getriebe an das erforderliche Drehmoment des Mitnehmerritzels anpassen.

### BREMSEINHEIT MIT AKTIVER RÜCKSPEISUNG ÜBER DREHSTROMMOTOREN

Als Bremseinheiten können bürstenlose Drehstrommotoren eingesetzt werden. Das Motormoment kann auch hier mittels Getriebe an das erforderlich Drehmoment des Ritzels angepaßt werden. Beim Bremsen wird die Energie in einen Gleichspannungszwischenkreis zurückgespeist. Damit die Zwischenkreisspannung während des Bremsens konstant bleibt, sollte der Gleichspannungszwischenkreis batteriegestützt sein.

Da beim Beschleunigen und Verzögern des Fahrzeugs stets Energie zurückgespeist wird, sollte drauf geachtet werden, daß die Energiebilanz des batteriegestützten Gleichspannungszwischenkreises ausgeglichen ist. Gegebenenfalls sollte überschüssige Energie wieder aus dem Zwischenkreis entnommen werden. Dies kann beispielsweise beim Stillstand des Fahrzeugs geschehen. Im Fahrzeugstillstand können die Bremseinheiten motorisch betrieben werden. Wenn das Moment gleichmäßig auf die beiden gegenläufigen Ketten verteilt wird, hebt sich die Kraftwirkung auf das Fahrzeug auf und beeinträchtigt nicht die Genauigkeit der Positionierung. Die Kette wird die zugeführte mechanische Energie dann an die zentralen Antriebseinheiten abgeben, wobei die Motoren der zentralen Antriebseinheiten die Energie generatorisch in ein Stromnetz zurückspeisen.

Ein Ausgleich der Zwischenkreis-Energiebilanz kann auch dadurch erfolgen, daß die Kette mit geringerer Geschwindigkeit umläuft, als für die Endgeschwindigkeit der Fahrzeugs vorgesehen ist. In einer ersten Beschleunigungsphase wird das Fahrzeug durch Bremsen des Ritzels und Mitziehen auf die Geschwindigkeit der Kette beschleunigt. In einer zweiten Phase werden die Bremseinheiten motorisch betrieben, so daß das Fahrzeug gegenüber der Kette beschleunigt wird und eine höhere Geschwindigkeit als die der Kette annimmt.

Als Motoren für die aktive Rückspeisung mit Drehstrommotoren kommen grundsätzlich sowohl Synchron- als auch Asynchronmotoren in Frage.

### BREMSEINHEIT MIT AKTIVER RÜCKSPEISUNG ÜBER GLEICHSTROMMOTOREN

Beim Bremsen mit Drehstrombremseinheiten sind erforderliche Umrichter grundsätzlich für eine der Antriebsleistung des Fahrzeugs entsprechende Leistung auszulegen. Für typische Anwendungsfälle können dies mehrere 100 kW sein. Die Umrichterleistung kann verkleinert werden, indem ein fremderregter Gleichstrommotor für die Bremseinheit verwendet wird. Durch Ansteuerung der Erregerwicklung läßt sich ein gewünschtes Bremsmoment einstellen. Im Vergleich zur Antriebsleistung ist dann zum Ansteuern der Erregerwicklung nur ein Bruchteil der Leistung notwendig.

Die Motorwicklung kann an einen Zwischenkreis geschaltet sein und Strom in diesen zurückspeisen. Im Leerlauf - Stillstand des Fahrzeugs - kann die Motorwicklung vom Zwischenkreis getrennt werden.

## Patentansprüche

1. Fahrzeugantriebssystem mit
- einer entlang eines Fahrweges (4) in einer ersten Richtung beweglichen Antriebskette (21-23),
- zumindest einer an einem Fahrzeug (11,12) vorgesehenen Antriebseinheit mit einem in die Antriebskette .(21-23) greifenden Zahnrad (112, 122) und einer auf das Zahnrad (112, 122) einwirkenden Bremseinrichtung (111, 121), wobei die Antriebskette in einer zweiten zur ersten Richtung entgegengesetzten Richtung umlaufend beweglich ist,
**dadurch gekennzeichnet, daß** am Fahrzeug eine zweite Antriebseinheit vorgesehen ist, deren Zahnrad in einen in die zweite Richtung beweglichen Abschnitt der Antriebskette oder in eine zweite entlang des Fahrweges gegenläufig bewegliche Antriebskette greift.

2. Fahrzeugantriebssystem nach Anspruch 1, bei dem zumindest ein Zahnrad formschlüssig in eine Antriebskette greift.

3. Fahrzeugantriebssystem nach einem der Ansprüche 1 oder 2, bei dem
zumindest eine Bremseinrichtung als Wirbelstrombremse ausgestaltet ist.

4. Fahrzeugantriebssystem nach einem der Ansprüche 1 oder 2, bei dem
zumindest eine Bremseinrichtung als in ein Stromnetz und/oder Batteriesystem zurückspeisender Gleichstrommotor ausgestaltet ist.

5. Fahrzeugantriebssystem nach einem der Ansprüche 1 oder 2, bei dem
zumindest eine Bremseinrichtung als in ein Stromnetz und/oder Batteriesystem zurückspeisender Drehstrommotor ausgestaltet ist.

6. Fahrzeugantriebssystem nach einem der Ansprüche 1 bis 5, bei dem
zumindest eine Bremseinrichtung hinsichtlich ihres Bremsmoments zwischen Leerlauf und vollem Bremsmoment stufenlos regulierbar ist.

7. Verfahren zum Betrieb eines Fahrzeugantriebssystems nach einem der Ansprüche 1 bis 6, bei dem
- zumindest eine umlaufende Antriebskette (21-23) mit im wesentlichen konstanter Umlaufgeschwindigkeit betrieben wird,
- ein Fahrzeug (11, 12) durch Ausüben eines Bremsmoments auf ein Zahnrad (112, 122) einer ersten Antriebseinheit beschleunigt wird, das in eine sich entlang eines Fahrwegs in eine erste Richtung bewegende Antriebskette (21-23) greift, wobei die Antriebskette (21-23) in einer zweiten zur ersten Richtung entgegengesetzten Richtung beweglich ist,
**dadurch gekennzeichnet, daß** das Fahrzeug (4) durch Ausüben eines Bremsmoments auf ein Zahnrad (112, 122) einer zweiten Antriebseinheit abgebremst wird, das in einen in einen in die zweite Richtung beweglichen Abschnitt der Antriebskette (21-23) oder in eine zweite sich entlang des Fahrwegs entgegen der Fahrtrichtung bewegende Antriebskette (21-23) greift.

8. Verfahren nach Anspruch 7,
bei dem das Fahrzeug durch Ausüben eines Antriebsmoments auf ein Zahnrad beschleunigt wird, das in eine sich entlang des Fahrwegs in Fahrtrichtung bewegende Antriebskette greift.

9. Verfahren nach einem der Ansprüche 7 oder 8,
bei dem als Bremseinrichtungen in ein Batteriesystem zurückspeisende Motoren verwendet werden und die Bremseinrichtungen bei Fahrzeugstillstand derart motorisch betrieben werden, daß betragsmäßig gleich große entgegengerichtete Antriebsmomente auf gegenläufige Antriebsketten übertragen werden, welche die Antriebsmomente auf generatorisch betriebene Antriebseinheiten der Antriebsketten übertragen.

10. Steuerungsprogramm zum Betrieb eines Fahrzeugantriebssystems nach einem der Ansprüche 1 bis 6, das in einen Arbeitsspeicher eines Rechners ladbar ist und zumindest einen Codeabschnitt aufweist, bei dessen Ausführung
- zumindest eine umlaufende Antriebskette (21-23) mit im wesentlichen konstanter Umlaufgeschwindigkeit betrieben wird,
- ein Fahrzeug (11, 12) durch Ausüben eines Bremsmoments auf ein Zahnrad (112, 122) einer ersten Antriebseinheit beschleunigt wird, das in eine sich entlang eines Fahrwegs in eine erste Richtung bewegende Antriebskette (21-23) greift, wobei die Antriebskette (21-23) in einer zweiten zur ersten Richtung entgegengesetzten Richtung beweglich ist,
- das Fahrzeug (4) durch Ausüben eines Bremsmoments auf ein Zahnrad (112, 122) einer zweiten Antriebseinheit abgebremst wird, das in einen in einen in die zweite Richtung beweglichen Abschnitt der Antriebskette (21-23) oder in eine zweite sich entlang des Fahrwegs entgegen der Fahrtrichtung bewegende Antriebskette (21-23) greift,
wenn das Steuerungsprogramm im Rechner abläuft.

## Claims

1. Vehicle drive system having
- a drive chain (21-23) which can move in a first direction along a pathway (4),
- at least one drive unit which is provided on a vehicle (11, 12) and has a toothed wheel (112, 122) which engages in the drive chain (21-23) and a brake device (111, 121) which acts on the toothed wheel (112, 122), it being possible to circulate the drive chain in a second direction which is opposite to the first direction,
**characterized in that** a second drive unit is provided on the vehicle, the toothed wheel of this drive unit engaging in a section of the drive chain which can move in the second direction or in a second drive chain which can move in the opposite direction along the pathway.

2. Vehicle drive system according to Claim 1, in which at least one toothed wheel engages in a drive chain in an interlocking manner.

3. Vehicle drive system according to either of Claims 1 and 2, in which at least one brake device is designed as an eddy-current brake.

4. Vehicle drive system according to either of Claims 1 and 2, in which at least one brake device is designed as a DC motor which feeds back to a mains supply and/or battery system.

5. Vehicle drive system according to either of Claims 1 and 2, in which at least one brake device is designed as a three-phase AC motor which feeds back to a mains supply and/or battery system.

6. Vehicle drive system according to one of Claims 1 to 5, in which the braking torque of at least one brake device can be controlled in an infinitely variable manner between idling and full braking torque.

7. Method for operating a vehicle drive system according to one of Claims 1 to 6, in which
- at least one circulating drive chain (21-23) is operated at a substantially constant circulation speed,
- a vehicle (11, 12) is accelerated by exerting a braking torque on a toothed wheel (112, 122) of a first drive unit, the said toothed wheel engaging in a drive chain (21-23) which moves in a first direction along a pathway, it being possible to move the drive chain (21-23) in a second direction which is opposite the first direction,
**characterized in that** the vehicle (4) is braked by exerting a braking toque on a toothed wheel (112, 122) of a second drive unit, the said toothed wheel engaging in a section of the drive chain (21-23) which can move in the second direction or in a second drive chain (21-23) which moves along the pathway against the direction of travel.

8. Method according to Claim 7, in which the vehicle is accelerated by exerting a drive torque on a toothed wheel which engages in a drive chain which moves along the pathway in the direction of travel.

9. Method according to either of Claims 7 and 8, in which the brake devices used are motors which feed back to a battery system, and the brake devices are operated as motors when the vehicle is stationary in such a way that opposite drive torques which are of equal magnitude are transmitted to drive chains which run in opposite directions and transmit the drive torques to drive units of the drive chains which are operated as generators.

10. Control program for operating a vehicle drive system according to one of Claims 1 to 6, which can be loaded into a working memory of a computer and has at least one code section, during the execution of which control program
- at least one circulating drive chain (21-23) is operated at a substantially constant circulation speed,
- a vehicle (11, 12) is accelerated by exerting a braking torque on a toothed wheel (112, 122) of a first drive unit, the said toothed wheel engaging in a drive chain (21-23) which moves in a first direction along a pathway, it being possible to move the drive chain (21-23) in a second direction which is opposite the first direction,
- the vehicle (4) is braked by exerting a braking torque on a toothed wheel (112, 122) of a second drive unit, the said toothed wheel engaging in a section of the drive chain (21-23) which can move in the second direction or in a second drive chain (21-23) which moves along the pathway against the direction of travel,
when the control program is run in the computer.

## Revendications

1. Système de traction de véhicule, comprenant
- une chaîne (21 à 23) de traction, mobile dans un premier sens le long d'une voie de communication (4),
- au moins une unité de traction, prévue sur un véhicule (11, 12) et ayant une roue dentée (112, 122) engrenant dans la chaîne (21 à 23) de traction et un dispositif (111, 121) de frein, agissant sur la roue (112, 122) dentée, la chaîne de traction étant mobile en tournant dans un deuxième sens opposé au premier sens,
**caractérisé en ce qu'**il est prévu sur le véhicule une deuxième unité de traction, dont la roue dentée engrène dans un tronçon, mobile dans le deuxième sens, de la chaîne de traction ou dans une deuxième chaîne de traction, mobile en sens opposé le long de la voie de communication.

2. Système de traction de véhicule suivant la revendication 1, dans lequel au moins une roue dentée engrène à complémentarité de forme dans une chaîne de traction

3. Système de traction de véhicule suivant l'une des revendications 1 ou 2, dans lequel au moins un dispositif de frein est conformé en frein à courants de Foucault.

4. Système de traction de véhicule suivant l'une des revendications 1 ou 2, dans lequel au moins un dispositif de frein est conformé en moteur à courant continu, alimentant en retour un réseau de courant et/ou un système de batterie.

5. Système de traction de véhicule suivant l'une des revendications 1 ou 2, dans lequel au moins un dispositif de frein est conformé en moteur à courant continu, alimentant en retour un réseau de courant et/ou un système de batterie.

6. Système de traction de véhicule suivant l'une des revendications 1 à 5, dans lequel au moins un dispositif de frein peut être régulé en continu du point de vue de son couple de freinage entre la marche à vide et le couple de freinage plein.

7. Procédé pour faire fonctionner un système de traction de véhicule suivant l'une des revendications 1 à 6, dans lequel
- on fait fonctionner à une vitesse de rotation sensiblement constante une chaîne (21 à 23) de traction qui tourne,
- on accélère un véhicule (11, 12) en appliquant un couple de freinage à une roue dentée (112, 122) d'une première unité de traction, roue dentée qui engrène dans une chaîne (21 à 23) de traction se déplaçant dans un premier sens le long d'une voie de communication, la chaîne (21 à 23) de traction étant mobile dans un deuxième sens opposé au premier sens,
**caractérisé en ce que** l'on freine le véhicule (4) en appliquant un couple de freinage à une roue dentée (112, 122) d'une deuxième unité de traction, roue qui engrène dans un tronçon, mobile dans le deuxième sens, de la chaîne (21 à 23) de traction ou dans une deuxième chaîne (21 à 23) de traction, se déplaçant dans le sens inverse du trajet le long de la voie de communication.

8. Procédé suivant la revendication 7, dans lequel on accélère le véhicule en appliquant un couple de traction à une dent dentée qui engrène dans une chaîne de traction se déplaçant dans le sens du trajet le long de la voie de communication.

9. Procédé suivant l'une des revendications 7 ou 8, dans lequel on utilise, comme dispositif de frein, des moteurs alimentant en retour un système de batterie et on fait fonctionner en moteur les dispositifs de frein lors de l'arrêt du véhicule de façon à transmettre à des chaînes de traction tournant en sens opposé des couples de traction de sens opposé de même valeur absolue, ces chaînes transmettant les couples de traction à des unités de traction des chaînes de traction, qui fonctionnent en génératrice.

10. Programme de commande de faire fonctionner un système de traction de véhicule suivant l'une des revendications 1 à 6, qui peut être chargé dans une mémoire de travail d'un ordinateur et qui a au moins une partie de code, dans la réalisation duquel,
- au moins une chaîne (21 à 23) de traction qui tourne fonctionne en ayant une vitesse de rotation sensiblement constante,
- un véhicule (11, 12) est accéléré en appliquant un couple de freinage à une roue dentée (112, 122) d'une première unité de traction, roue dentée qui engrène dans une chaîne (21 à 23) de traction se déplaçant dans un premier sens le long d'une voie de communication, la chaîne (21 à 23) de traction étant mobile dans un deuxième sens opposé au premier sens,
- le véhicule (4) est freiné en appliquant un couple de freinage à une roue dentée (112, 122) d'une deuxième unité de traction, roue dentée qui engrène dans une partie mobile dans le deuxième sens, de la chaîne (21 à 23) de traction ou dans une deuxième chaîne (21 à 23) de traction se déplaçant dans le sens inverse au sens du trajet le long de la voie de communication, lorsque le programme de commande se déroule dans l'ordinateur.
